Europäisches Patentamt

European Patent Office

Office européen des brevets

(19)

(11) **EP 1 136 983 A1**

(12) **EUROPEAN PATENT APPLICATION**

(43) Date of publication:
26.09.2001 Bulletin 2001/39

(51) Int Cl.⁷: **G10L 15/26**

(21) Application number: **00309800.1**

(22) Date of filing: **06.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Pan, James**<br>Stanford, California 94305 (US)<br><br>(74) Representative: **Hackney, Nigel John et al**<br>Mewburn Ellis,<br>York House, |
| (30) Priority: **23.03.2000 US 535431** | 23 Kingsway<br>London WC2B 6HP (GB) |
| (71) Applicant: **Verbaltek, Inc.**<br>San Jose, California (US) | |

(54) **Client-server distributed speech recognition**

(57)    A speech communication system and method for utilization on a communications network system, such as the Internet, comprising a plurality of acoustic recognizers embedded in the mobile electronic communication devices for recognizing speech information and generating a first set of associated language information, and a plurality of linguistic recognizers embedded in data processing devices, such as servers, for recognizing said first set of associated language information and generating a second set of associated language information, thereby more accurately recognizing the speech information in a distributed speech recognition processing manner.

Figure 2

**Description**

This invention relates generally to speech recognition information transmission and more specifically to a speech recognition communication between a remote mobile electronic device and a computer through the Internet.

Transmission of information from humans to machines has been traditionally achieved though manually-operated keyboards, which presupposes machines having dimensions at least as large as the comfortable finger-spread of two human hands. With the advent of electronic devices requiring information input but which are smaller than traditional personal computers, the information input began to take other forms, such as pen pointing, touchpads, and voice commands. The information capable of being transmitted by pen-pointing and touchpads is limited by the display capabilities of the device (such as personal digital assistants (PDAs) and cell phones). Therefore, significant research effort has been devoted to speech recognition systems for electronic devices. Among the approaches to speech recognition by machine is for the machine to attempt to decode a speech signal waveform based on the observed acoustical features of the signal and the known relation between acoustic features and phonetic sounds. This acoustic-phonetic approach has been the subject of research for almost 50 years, but has not resulted in much success in practice (cf. *Fundamentals of Speech Recognition,* L. Rabiner & B.H. Juang, Prentice-Hall). Problems abound, for example, it is known in the speech recognition art that even in a speech waveform plot, "it is often difficult to distinguish a weak, unvoiced sound (like "f" or "th") from silence, or a weak, voiced sound (like "v" or "m") from unvoiced sounds or even silence" and there are large variations depending on the identity of the closely-neighboring phonetic units, the so-called coarticulation of sounds (*ibid*.). After the decoding, the determination of the word in the acoustic-phonetic approach is attempted by use of the so-called phoneme lattice which represents a sequential set of phonemes that are likely matches to spoken input. The vertical position of a phoneme in the lattice is a measure of the goodness of the acoustic match to phonetic unit ("lexical access"). But "the real problem with the acoustic-phonetic approach to speech recognition is the difficulty in getting a reliable phoneme lattice for the lexical access stage" (*ibid*.); that is, it is almost impossible to accurately label an utterance accurately because of the large variations inherent in any language.

In the pattern-recognition approach, a knowledge base of versions of a given speech pattern is assembled ("training"), and recognition is achieved through comparison of the input speech pattern with the speech patterns in the knowledge base to determine the best match. The paradigm has four steps: (1) feature measurement using spectral analysis, (2) pattern training to produce reference patterns for an utterance class, (3) pattern classification to compare unknown test patterns with the class reference pattern by measuring the spectral "distance" between two well-defined spectral vectors and aligning the time to compensate for the different rates of speaking of the two patterns (dynamic time warping, DTW), and (4) decision logic whereby similarity scores are utilized to select the best match. Pattern recognition requires heavy computation, particularly for steps (2) and (3) and computation for large numbers of sound classes often becomes prohibitive. Therefore, systems relying on the human voice for information input, because of the inherent vagaries of speech (including homophones, word similarity, accent, sound level, syllabic emphasis, speech pattern, background noise, and so on), require considerable signal processing power and large look-up table databases in order to attain even minimal levels of speech recognition accuracy. Mainframe computers and high-end workstations are beginning to approach acceptable levels of voice recognition, but even with the memory and computational power available in present personal computers (PCs), voice recognition for those machines is so far largely limited to given sets of specific voice commands. For devices with far less memory and processing power than PCs, such as PDAs, mobile phones, toys, and entertainment devices, accurate general speech recognition has been hitherto impossible. For example, a typical voice-activated cellular phone allows preprogramming by reciting a name and then entering an associated number. When the user subsequently recites the name, a microprocessor in the cell phone will attempt to match the recited name's voice pattern with the stored number. As anyone who has used present day voice-activated cell phones knows, the match is sometimes inaccurate (due to inconsistent pronunciation, background noise, and inherent limitations due to lack of processing power) and only about 25 stored numbers are possible. In PDA devices, it is necessary for device manufacturers to perform extensive redesign to achieve even very limited voice recognition (for example, present PDAs cannot search a database in response to voice input).

As for different ways of speech input, spell mode utterances have problems with the confusable sets: {A,J, K}, {B,C,D,E,F,P,T,V,Z}, {Q,U}, {I,Y}, and {F,S,X}. These can generally only be discriminated based upon a small, critical portion of the utterance. Since conventional recognition relies on a simple accumulated distortion score over the entire utterance duration (a binary "yes" or "no"), this does not place sufficient emphasis on the critical parts resulting in poor recognition accuracy. Clearly, an approach would be to weight the critical portions, but this method has not achieved high recognition accuracy and carries a heavy computational burden.

In sum, the memory and computation necessary for accurate and speedy voice recognition also require increased electrical power and complex operating systems; all of these carry increased cost. Thus present speech recognition technology is not feasible for hand-held information devices because of the former's weight, electrical power, complexity, and cost requirements.

Of particular present day interest is mobile Internet access; that is, communication through mobile phones, PDAs, and other hand-held electronic devices to the Internet. The Wireless Application Protocol (WAP) specification is intended to define an open, standard architecture and set of protocols for wireless Internet access. The Wireless Markup Language (WML) is defined by WAP as a presentation standard for mobile Internet applications. WML is a modified subset of the Web markup language Hypertext Markup Language (HTML), scaled appropriately to meet the physical constraints and data capabilities of present day mobile devices, for example the Global System for Mobile (GSM) phones. Typically, the HTML served by a Web site passes through a WML gateway to be scaled and formatted for the hand-held device. First phase WAP services deliver existing Web content to mobile devices, but in the future, Web content could be created specifically for mobile users, delivering information such as weather, stock quotes, banking services, e-commerce/business, navigation aids, and the like. There are some commercially available products already, such as the Nokia 7110, the Ericsson MC218, and the Motorola Timeport. The demand for mobile wireless Internet access is expected to explode. Ericsson Mobile Communications predicts that by 2004, there will be one billion mobile Internet users. But efficient mobile Internet access will require new technologies. There are data rate improvements on the horizon, such as General Packet Radio Service (GPRS), Enhanced Data Rates for GSM Evolution (EDGE), and the Third Generation Universal Mobile Telecommunications System (3G-UMTS). In particular, UMTS promises (in 2002) wideband data rates up to 2 megabits/second (over 200 times the 9.6 kilobit data rate of current GSM phones). But however much the transmission rates and bandwidth increase, the content is reduced or compressed, and the display features modified to efficiently display information, the vexing problem of information input and transmission at the mobile device end has not been solved. Conventional speech-to-Internet communication requires the computational power and memory requirements of at least present-day personal computers (PCs) to perform the transmission of voice packets to the Internet Service Provider (ISP) servers utilizing the so-called Voice over Internet Protocol (VoIP). Even with such computing power and memory available, VoIP allows only limited recognition and accuracy. Further, conventional server-based speech recognition systems (for example, produced by the companies Nuance and SpeechWorks) can only provide service to fewer than ten users per server. Thus, for 100,000 putative users (not a particularly large number considering the number of present-day mobile phone users), 10,000 servers are needed, making such speech recognition economically unfeasible. The problem is thus scalability. For PC to server Internet voice communication, databases are typically downloaded from the server to the PC client (for example by the company Conversa), but the size of the database makes this method prohibitive for mobile devices.

The present invention is a speech communication system and method for utilization on a communications network system, such as the Internet, comprising a plurality of acoustic recognizers embedded in the mobile electronic communication devices for recognizing speech information and generating a first set of associated language information, and a plurality of linguistic recognizers embedded in data processing devices, such as servers, for recognizing said first set of associated language information and generating a second set of associated language information, thereby more accurately recognizing the speech information in a distributed speech recognition processing manner.

**Brief Description of the Drawings**

Figure 1 is a block diagram of the personalized database according to the present invention.
Figure 2 is a block diagram of the speech recognition system according to the invention.
Figure 3 is a block diagram of an LPC front-end processor according to the present invention.
Figure 4 is a block diagram of the letter speech recognition system according to the present invention.
Figure 5 is an example of a waveform for a letter as generated by the microphone according to the present invention.
Figure 6 is the dynamic time warping initialization flowchart procedure for calculating the Total Distortion cepstrum according to the present invention.
Figure 7 is the dynamic time warping iteration procedure flowchart for calculating the Total Distortion cepstrum according to the present invention.
Figure 8 is the dynamic time warping flowchart for calculating the relative values of the Total Distortion cepstrum according to the present invention.
Figure 9 is a block diagram of the system architecture of a cellular phone having an embodiment of the present invention embedded therein.
Figure 10 illustrates the word recognition performance results of one embodiment of the present invention as compared to the prior art systems ART and Sensory
Figure 11 is a diagram of a preferred embodiment of the present invention utilizing acoustic recognizers at the mobile device end and linguistic recognizers at the server end.
Figure 12 is a diagram of a preferred embodiment of the present invention utilizing

Detailed Description of Embodiments of the Invention

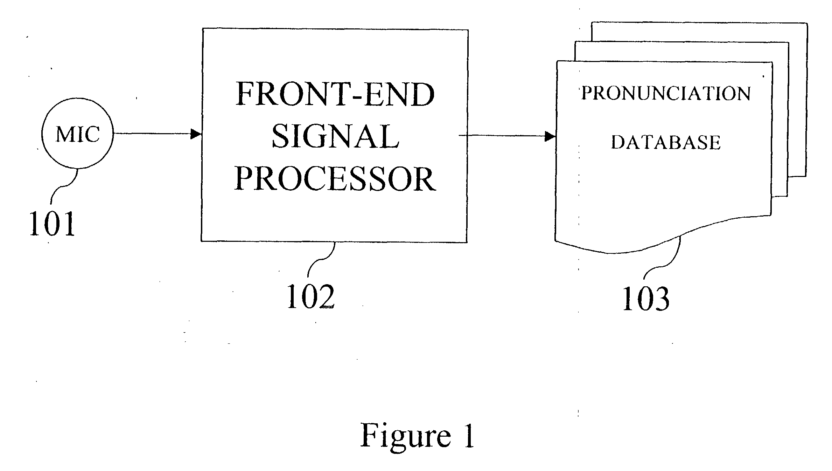

Figure 1 is a block diagram of the personalized database 100 of the present invention. A microphone 101 receives an audio voice string (in one embodiment, a series of letters or characters) and converts the voice string into an electronic waveform signal. A front-end signal processor 102 processes the waveform to produce a parametric representation of the waveform suitable for recognition and comparison. In the preferred embodiment, the voice string is processed by linear predictive coding (LPC), producing a parametric representation for each letter or character (so-called "feature extraction") which removes redundant information from the waveform data to describe more distinctly each audio signal. The result, for example for letters of the English alphabet, is a 26 x 26 matrix wherein columns hold the parametric representations of each letter and the rows will hold inputted speech letters. In the present invention, the matrix is a "calibration template" consisting of the individual user's pronunciation of the letters stored in pronunciation database 103. Because voice inputs are calibrated by the calibration template, typical speech recognition inaccuracies are avoided in aggregated utterance (e.g., word) comparisons. A sample calibration table is appended for reference at pages 24-26.

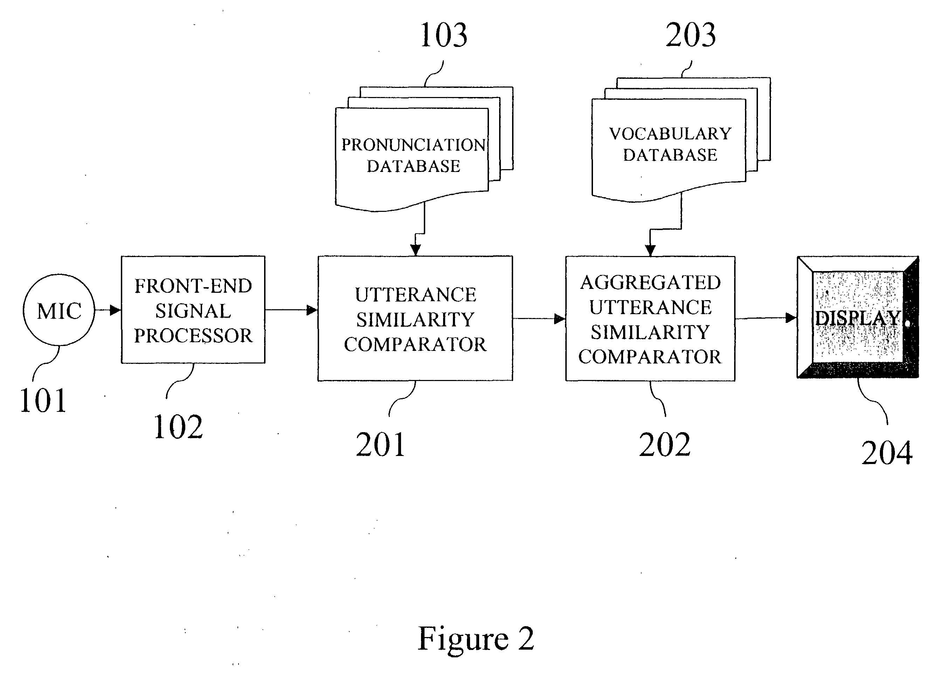

Figure 2 is a block diagram of the preferred embodiment of the invention. The microphone 101 receives a sequence of inputted utterances which are transmitted to the front-end signal processor 102 to form a parameterized voice string waveform set which is then compared with the pronunciation database 103 using an utterance comparator 201 to select the best match for the individual utterances (e.g., letters or characters). As an example, suppose the name "Michael" is inaccurately pronounced "n-y-d-h-a-b-l" (the errors presumably due to confusable pronunciations of letters). In one embodiment, letter comparator 201 accepts the voice string and determines the "distance" between the voice string utterances and the calibration template in pronunciation database 103 by testing the six letters in the example against all the letters in pronunciation database 103. In another embodiment, similarly pronounced letters (or any sounds) are grouped based on similarity, so the comparison is more efficient. Aggregated utterance similarity comparator 202 compares the calibrated letter series waveform to the entries in a prerecorded vocabulary database 203. In the example, even though the word may still not be accurately voice spelled, because there are only a limited number of sensical words such as "Michael", the chance of an accurate word match is considerably increased. In the preferred embodiment of the invention, vocabulary database 203 is a dictionary database available from the assignee of this invention, VerbalTek, Inc. Another embodiment of this invention advantageously utilizes a dictionary database from Motorola entered into vocabulary database 201. Still another embodiment of this invention utilizes address book entries by the user. The present invention contemplates word dictionaries consisting of any terms which are desired by the user for vocabulary database 203. For example, specialized words for specific areas of endeavor (commercial, business, service industry, technology, academic, and all professions such as legal, medical, accounting, and so on) can be advantageously entered into vocabulary database 203. Further, the present invention contemplates advantageous utilization for monosyllabic word languages such as Chinese, wherein the individual utterances (Chinese characters) when aggregated into character strings become more distinct. Through comparison of the pre-recorded waveforms in vocabulary database 203 with the inputted waveforms a sequential set of phonemes is generated that are likely matches to the spoken input, and a phoneme lattice is generated. The lattice is constructed by assigning each inputted waveform a "score" value based upon the closeness of each inputted combination to a word in vocabulary database 203. The "closeness" index is based upon a calculated distortion between the input waveform and the stored vocabulary waveforms, thereby generating "distortion scores". Since the scores are based on relatively accurate (compared with traditional speech recognition acoustic-phoneme methods) matches of letters or characters, the phoneme lattice produces word matches at 95% and above accuracy. The best matches for the words are then displayed on display 204.

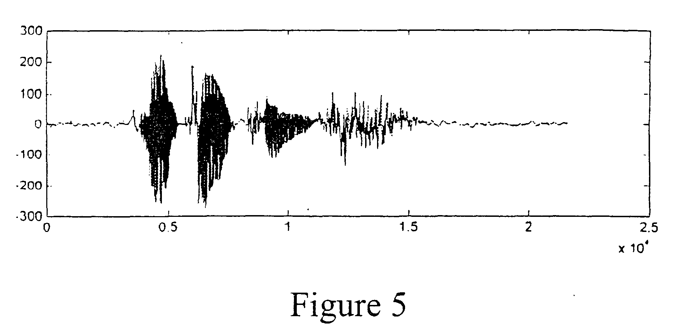

In the preferred embodiment of the invention, the front-end signal processing to convert the speech waveform (an example of which is shown in Figure 5) to a parametric representation utilizes linear predictive coding (LPC). LPC is particularly suited for the present invention because (1) LPC is more effective for the voiced regions of the speech spectral envelope than for the unvoiced regions, and the present invention advantageously utilizes individual letter or character utterances which emphasize the distinctive character or letter or character sounds and have natural pauses (so that the unvoiced regions are less significant), and (2) LPC offers a simplified computation and an economical representation that takes into consideration vocal tract characteristics (thereby allowing personalized pronunciations to be achieved with minimal processing and storage). The particular efficacy of LPC in the present invention is illustrated, for example, in the LPC autocorrelation method, where it is assumed that the speech segment is identically zero outside of a given interval (tantamount to multiplying the speech signal by a finite length window), so the unvoiced regions are not well represented. In the LPC transfer function, $H(z) = S(z)/GU(z)$, where the gain G of the source is estimated from the speech signal and the scaled source is used as input to a digital filter $H(z)$, which is controlled by the vocal tract parameters characteristic of the speech being produced.

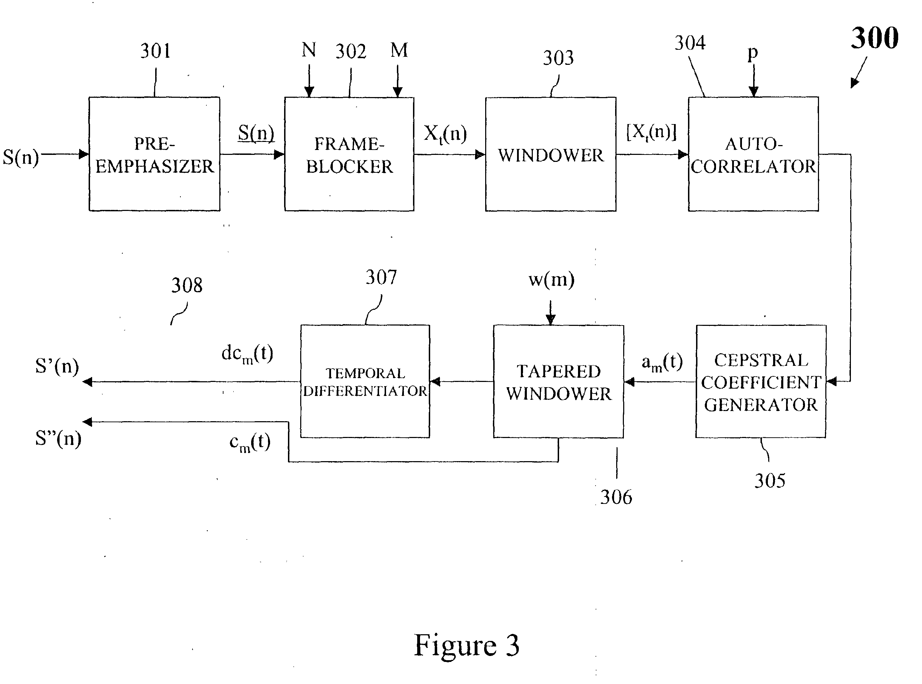

Figure 3 is a block diagram of an LPC front-end processor 102 according to the preferred embodiment of the invention. A preemphasizer 301 which preferably is a fixed low-order digital system (typically a first-order FIR filter) spectrally flattens the signal s(n), and is described by:

$$H(z) = 1 - az^{-1} \qquad \text{(Eqn 1)}$$

where $0.9 \leqq a \leqq 1.0$.

In another embodiment of the invention, preemphasizer 301 is a first-order adaptive system having the transfer function

$$H(z) = 1 - a_n z^{-1} \qquad \text{(Eqn 2)}$$

where $a_n$ changes with time (n) according to a predetermined adaptation criterion, for example, $a_n = r_n(1)/r_n(0)$.

Frame blocker 302 frame blocks the speech signal in frames of N samples, with adjacent frames being separated by M samples. In this embodiment of the invention, N = M = 160 when the sampling rate of the speech is 8 kHz, corresponding to 20 msec frames with no separation between them. There is one feature per frame so that for a one second utterance (50 frames long), 12 parameters represent the frame data, and a 50 x 12 matrix is generated (the template feature set).

Windower 303 windows each individual frame to minimize the signal discontinuities at the beginning and end of each frame. Autocorrelator 304 performs autocorrelation giving

$$r_l(m) = \sum_{n=0}^{N-1-m} x_l(n)x_l(n+m) \qquad \text{(Eqn 3)}$$

where m = 0, 1,..., p, and p is the highest autocorrelation value (the order of the LPC analysis). The preferred embodiment of this invention uses p = 10, but values of p from 8 to 16 can also be advantageously used. The zeroth autocorrelation is the frame energy of a given frame. Cepstral coefficient generator 305 converts each frame into cepstral coefficients (the coefficients of the Fourier transform representation of the log magnitude spectrum, refer below) using Durbin's method, which is known in the art. Tapered windower 306 weights the cepstral coefficients in order to minimize the effects of noise. Tapered windower 306 is chosen to lower the sensitivity of the low-order cepstral coefficients to overall spectral slope and the high-order cepstral coefficients to noise (or other undesirable variability). Temporal differentiator 307 generates the first time derivative of the cepstral coefficients preferably employing an orthogonal polynomial fit to approximate (in this embodiment, a least-squares estimate of the derivative over a finite-length window) to produce processed signal S'(n). In another embodiment, the second time derivative can also be generated by temporal differentiator 307 using approximation techniques known in the art to provide further speech signal information and thus improve the representation of the spectral properties of the speech signal. Yet another embodiment skips the temporal differentiator to produce signal S''(n). It is understood that the above description of the front-end signal processor 102 using LPC and the above-described techniques are for disclosing the preferred embodiment, and that other techniques and methods of front end signal processing can be advantageously employed in the present invention. The comparison techniques and methods for matching strings of utterances, be they individual characters or words, are substantially similar, so the following description encompasses both comparators 201 and 202.

In the preferred embodiment of the present invention, the parametric representation utilizes cepstral coefficients and the inputted speech is compared with the letter or word string entries in the prerecorded databases, by comparing cepstral distances. The inputted letters (or letters in word combination) generate a number of candidate character (or letter) matches which are ranked according to similarity. In the comparison of the pre-recorded waveforms with the input waveforms, a sequential set of phonemes that are likely matches to the spoken input are generated which, when ordered in a matrix, produces a phoneme lattice. The lattice is ordered by assigning each inputted waveform a "score" value based upon the closeness of each inputted combination to a word in the vocabulary database. The "closeness" index is based upon the cepstral distance between the input waveform and the stored vocabulary waveforms, thereby generating "distortion scores". Since the scores are based on relatively accurate (compared with traditional speech recognition acoustic-phoneme methods) matches of characters, the phoneme lattice of this invention produces word matches at 95% and above accuracy.

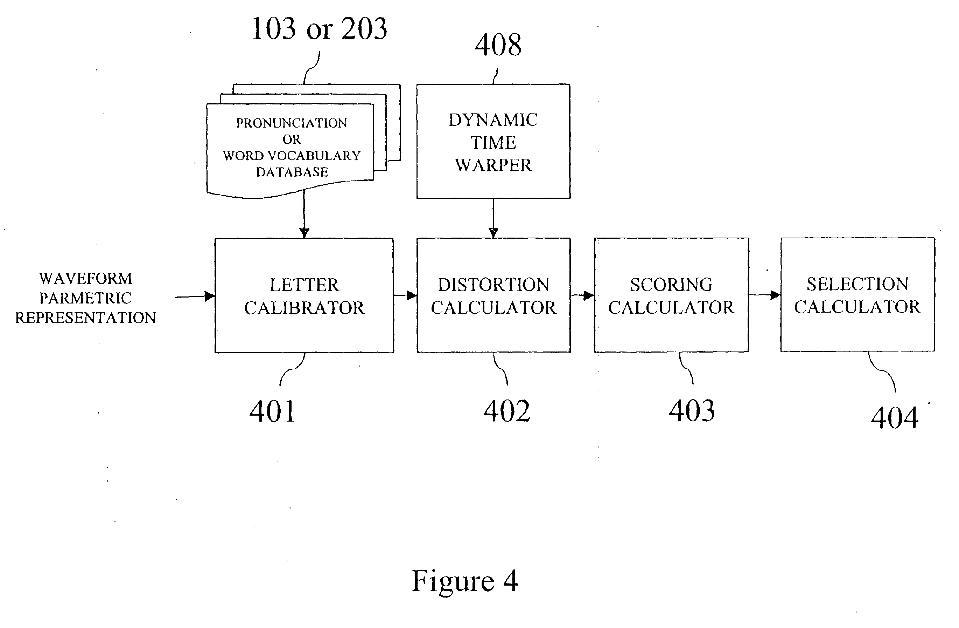

Figure 4 shows the waveform parametric representation inputted to letter calibrator 401 wherein, in conjunction with pronunciation database 103, a calibration matrix (example appended) is generated. Distortion calculator 402 calculates the distortion between the inputted speech and the entries in pronunciation database 103 based on, in the preferred embodiment, the calculated cepstral distances (described below). Scoring calculator 403 then assigns scores based on predetermined criteria (such as cepstral distances) and selector 404 selects the candidate letter (word).

The distance between two speech spectra on a log magnitude versus frequency scale is

$$V(\omega) = \log S(\omega) - \log S'(\omega). \qquad\qquad \text{(Eqn 4)}$$

To represent the dissimilarity between two speech feature vectors, the preferred embodiment utilizes the mean absolute of the log magnitude (versus frequency), that is, a root mean squared (rms) log spectral distortion (or "distance") measure utilizing the set of norms

$$d(S, S')^p = \int_{-\pi}^{\pi} |V(\omega)|^p d\omega/2\pi \qquad\qquad \text{(Eqn 5)}$$

where when p = 1, this is the mean absolute log spectral distortion and when p = 2, this is the rms log spectral distortion.

In the preferred embodiment, the distance or distortion measure is represented by the complex cepstrum of a signal, which is defined as the Fourier transform of the log of the signal spectrum. For a power spectrum which is symmetric with respect to $\omega = 0$ and is periodic for a sampled data sequence, the Fourier series representation of log $S(\omega)$ is

$$\log S(\omega) = \sum_{n=-\infty}^{\infty} c_n e^{-jn\omega} \qquad\qquad \text{(Eqn 6)}$$

where $c_n = c_{-n}$ are the cepstral coefficients.

$$c_0 = \int_{-\pi}^{\pi} \log S(\omega) d\omega/2\pi \qquad\qquad \text{(Eqn 7)}$$

$$d(S, S')^2 = \int_{-\pi}^{\pi} |\log S(\omega) - \log S'(\omega)|^2 d\omega/2\pi = \sum_{n=-\infty}^{\infty} (c_n - c_n')^2 \qquad\qquad \text{(Eqn 8)}$$

where $c_n$ and $c_n'$ are the cepstral coefficients of $S(\omega)$ and $S'(\omega)$, respectively. By not summing infinitely, for example 10-30 terms in the preferred embodiment, the present invention utilizes a truncated cepstral distance. This efficiently (meaning relatively lower computation burdens) estimates the rms log spectral distance. Since the perceived loudness of a speech signal is approximately logarithmic, the choice of log spectral distance is well suited to discern subjective sound differences. Furthermore, the variability of low cepstral coefficients is primarily due to vagaries of speech and transmission distortions, thus the cepstrum (set of cepstral distances) is advantageously selected for the distortion measure.

Different acoustic renditions of the same utterance are often spoken at different time rates so speaking rate variation and duration variation should not contribute to a linguistic dissimilarity score. Dynamic time warper (DTW) 408 performs the dynamic behavior analysis of the spectra to more accurately determine the dissimilarity between the inputted utterance and the matched database value. DTW 408 time-aligns and normalizes the speaking rate fluctuation by finding the "best" path through a grid mapping the acoustic features of the two patterns to be compared. In the preferred embodiment, DTW 408 finds the best path by a dynamic programming minimization of the dissimilarities. Two warping functions, $\varphi_x$ and $\varphi_y$, relate two temporal fluctuation indices, $i_x$ and $i_y$ respectively, of the speech pattern to a common time axis, k, so that

$$i_x = \varphi_x(k), \qquad k = 1,2,\ldots,T$$

$$\text{(Eqn 9)}$$

$$i_y = \varphi_y(k) \qquad k = 1,2,\ldots,T.$$

A global pattern dissimilarity measure is defined, based on the warping function pair, as the accumulated distortion over the entire utterance:

$$d_\varphi(X,Y) = \sum_{k=1}^{T} d(\varphi_x(k),\varphi_y(k))m(k)/M_\varphi \qquad \text{(Eqn 10)}$$

where $d(\varphi_x(k),\varphi_y(k))$ is a short-time spectral distortion defined for $\mathbf{x}_{\varphi x}(k)\mathbf{y}_{\varphi y}(k)$, m(k) is a nonnegative weighting function, $M_\varphi$ is a normalizing factor, and T is the "normal" duration of two speech patterns on the normal time scale. The path $\varphi = (\varphi_x, \varphi_y)$ is chosen so as to measure overall path dissimilarity with consistency. In the preferred embodiment of the present invention, the dissimilarity d(X,Y) is defined as the minimum of $d_\varphi(X,Y)$ over all paths, i.e.,

$$d(X,Y) = \min_\varphi d_\varphi(X,Y) \qquad \text{(Eqn 11)}$$

The above definition is accurate when X and Y are utterances of the same word because minimizing the accumulated distortion along the alignment path means the dissimilarity is measured based on the best possible alignment to compensate for speaking rate differences. It is known in the art that dynamic programming can solve sequential decision problems such as that described immediately above by finding the optimal path, meaning the minimum "cost" of moving from one point to another point. In one embodiment of the present invention, since the number of steps involved in the move are determined by "if-then" statements, the sequential decision is asynchronous. The decision utilizes a recursion relation that allows the optimal path search to be conducted incrementally and is performed by an algorithm in the preferred embodiment of the present invention as described below. The decision rule for determining the next point in an optimal path (the "policy"), together with the destination point, completely defines the cost which is sought to be minimized. The optimal policy for a move from the initial point 1 to an intermediate point j incurring a cost $\zeta(j, i)$, is given by

$$\varphi(1, i) = \min_j [\varphi(1, j) + \zeta(j, i)] \qquad \text{(Eqn 12)}$$

so for the optimal sequence of moves and associated minimum cost from a point i to a point j,

$$\varphi(i, j) = \min_l [\varphi(i, 1) + \varphi(1, j)]. \qquad \text{(Eqn 13)}$$

In another embodiment, the sequential decision is synchronous (regularity of decision process for a fixed number of moves, M), the associated minimum cost $\varphi_m(i, 1)$ is

$$\varphi_{m+1}(i, n) = \min_l [\varphi_m(i, 1) + \zeta(1, n)] \qquad \text{(Eqn 14)}$$

which is the recursion relation used in an embodiment of the present invention.

In both of the embodiments described above, the method follows the steps of (1) initialization, (2) recursion, (3) termination, and (4) backtracking as follows:

Initialization:
$$\varphi_1(i, n) = \zeta(i, n)$$
$$\xi_1(n) = i, \text{ for } n = 1, 2, ..., N$$

Recursion:
$$\varphi_{m+1}(i, n) = \min_{1 \le l \le N} [\varphi_m(i, l) + \zeta(l, n)]$$

$$\xi_{m+1}(n) = \arg\min_{1 \le l \le N} [\varphi_m(i, l) + \zeta(l, n)], \text{ for } n = 1, 2, \ldots, N \text{ and}$$

$$m = 1, 2, \ldots, M\text{-}2$$

Termination:
$$\varphi_M(i, j) = \min_{1 \le l \le N} [\varphi_{M\text{-}1}(i, l) + \zeta(l, j)]$$

$$\xi_M(j) = \arg\min_{1 \le l \le N} [\varphi_{M\text{-}1}(i, l) + \zeta(l, j)]$$

Path Backtracking    optimal path = $(i, i_1, i_2, ..., i_{M\text{-}1}, j)$,
where $i_m = \xi_{m+1}(i_{m+1})$, m = M-1, M-2, ..., 1,
with $i_M = j$.

The above algorithm is economical in the computing sense and thus suitable for implementation in the hand-held devices contemplated by this invention.

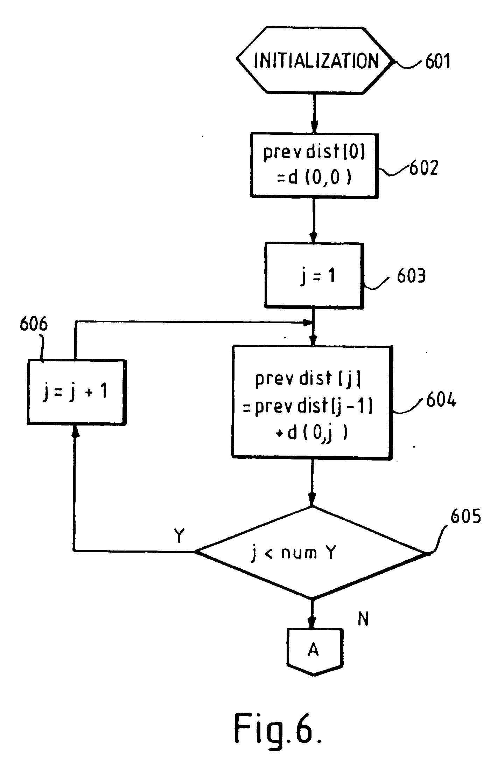

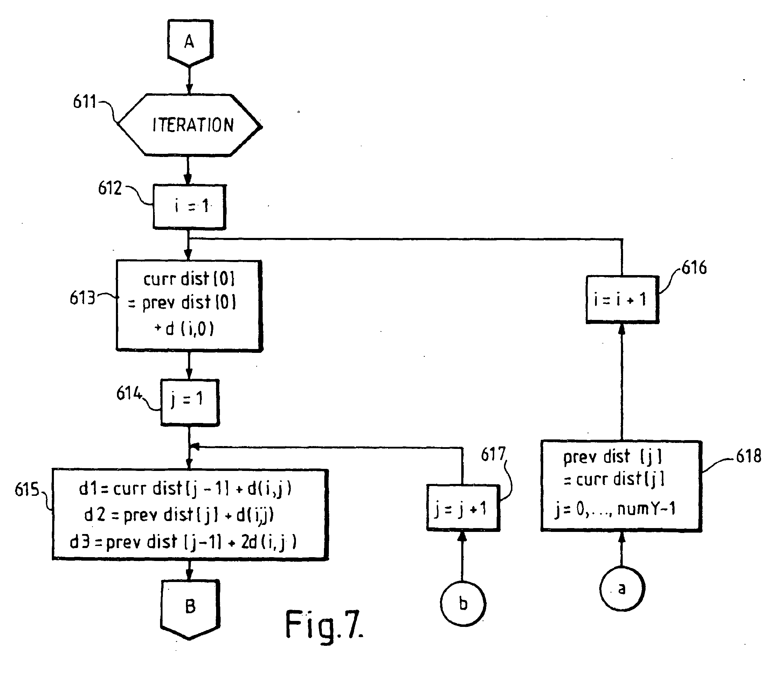

Figures 6, 7, and 8, constitute a flow chart of the preferred embodiment of DTW 408 for computing the Total Distortion between templates to be compared. The "distance" d(i,j) (Eqn. (11) above) is the distortion between the $i^{th}$ feature of template X and the $j^{th}$ feature of template Y. Figure 6 depicts the initialization procedure 601 wherein the previous distance is d(0,0) at 602. The index j is then incremented at 603 and the previous distance now is the distance at j (prev dist[j] which is equal to prev dist [j-1] + d(0,j). At 605, if j is less than number of features in template Y (j<numY), then j will be incremented at 606 and fed back to 604 for a new calculation of prev_dist[j]. If j is not greater than numY, then the initialization is complete and the Iteration Procedure 611 for the Total Distortion begins as shown in Figure 7. At 612, index i is set at one and the current distance (curr_dist[0]) is calculated as the prev_dist[0] plus d(i,0). At 614, j is set to one and the possible paths leading to an associated distance d1, d2, or d3 are calculated as:

$$\text{curr\_dist[j-1]} + d(i,j) = d1$$

$$\text{prev\_dist[j]} + d(i,j) = d2$$

$$\text{prev\_dist[j-1]} + d(i,j) = d1.$$

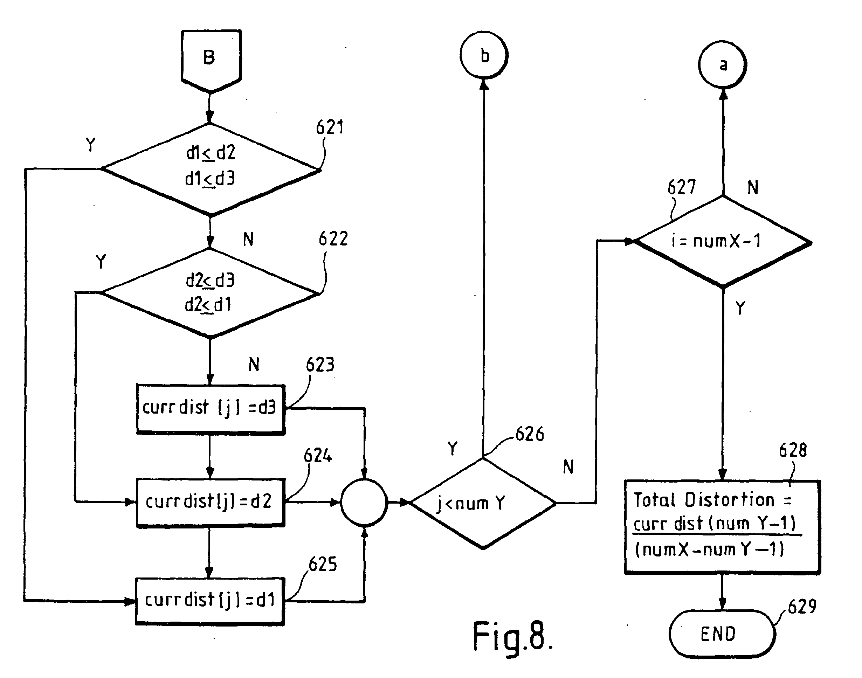

The relative values of the associated distances are then tested at 621 and 622 in Figure 8. If d3 is not greater than d1 and not greater than d2, then d3 is the minimum and curr_dist[j] will be d3 at 623. After testing for the $j^{th}$ feature to be less than the number of features in the Y template at 626, then j is incremented at 617 and fed back to the calculation of distances of possible paths and the minimization process recurs. If d2 is greater than d1 and d3 is greater than d1, then d1 is the minimum and is thus set as cun_dist[j]. Then j is again tested against the number of features in the Y template at 626, j is incremented at 617 and fed back for recursion. If d3 is greater than d2 and d1 is greater than d2, then d2 is the minimum and is set as cun_dist[j], and the like process is repeated to be incremented and fed back. In this way, the minimum distance is found. If j is greater than or equal to the number of features in template Y at 626, then i is tested to see if it is equal to the number of features in template X minus 1. If i is not equal to the number of features in template X minus 1, then the previous distance is set as the current distance for the j indices (up to numY-1) at 618, i is incremented at 616 and fed back to 613 for the setting of the current distance as the previous distance plus the new $i^{th}$ distance and the process is repeated for every i up the time j equals the number of features in template X minus 1. If i is equal to the number of features in the X template minus 1, then the Total Distortion is calculated at 628 as

$$\text{Total Distortion} = \frac{curr\_dist\ (numY\text{ - }1)}{(numY\text{ - }numY\text{ - }1)},$$

thus completing the algorithm for finding the total distortion.

To achieve optimum recognition accuracy, the warping functions are constrained. It is known in the art that even small speech endpoint errors result in significant degradation in speech detection accuracy. In carefully-enunciated speech in controlled environments, high detection accuracy is attainable, but for general use (such as in mobile phones), the vagaries of the speaker sounds (including lip smacks, breathing, clicking sounds, and so on), background noise, and transmission distortion (cross-talk, intermodulation distortion, and tonal interference) make accurate endpoint detection difficult. If the utterances have well-defined endpoints (marking the beginning and ending frames of the pattern), similarity comparisons will result in more accurate recognition. The present invention, in its utilization of individual characters (e.g., letters) for input utterance, achieves accuracy as a result of the generally more precise enunciation of individual characters (letters) and the typical pauses between individual characters (letters) when a character string is enunciated or a word is spelled. Temporal variations thus are generally confined to the region within the endpoints. The constraints for the warping function are thus simply setting the values at the beginning and ending points as the first and last temporal fluctuation indices, $i_x = 1$, and $i_y = T$. These endpoint constraints are incorporated into the present invention through Eqn (11), in terms of $T_x$ and $T_y$:

$$M_\varphi d(X,Y) \cong D(T_x, T_y) = \min_{\varphi x, \varphi y} \sum_{k=1}^{T} d(\varphi_x(k), \varphi_y(k))m(k) \qquad \text{(Eqn 15)}$$

where X and Y terminate at $T_x$ and $T_y$ respectively.

The preferred embodiment of the present invention provides a dynamic time warping regime that is optimally suited for the individual character (e.g., spelling) input utterance speech recognition system of the present invention. DTW 408 utilizes Eqn 15 to generate the minimum partial accumulated distortion along a path connecting (1,1) and $(i_x, i_y)$ as:

$$D(i_x, i_y) \cong \min_{\varphi x, \varphi y, T'} \sum_{k=1}^{T'} d(\varphi_x(k), \varphi_y(k))m(k) \qquad \text{(Eqn 16)}$$

where $\varphi_x(T') = i_x$ and $\varphi_y(T') = i_y$ and the dynamic programming recursion with constraints becomes

$$D(i_x, i_y) = \min_{(i',i')} [\, D(i_x', i_y') + \zeta((i_x', i_y'), (i_x, i_y))] \qquad \text{(Eqn 17)}$$

where $\zeta$ is the weighted accumulated distortion (local distance) between points $(i_x', i_y')$ and $(i_x, i_y)$,

$$\zeta((i_x', i_y'), (i_x, i_y)) = \sum_{l=0}^{L} d(\varphi_x(T'\text{-}l), \varphi_y(T'\text{-}l))m(T'\text{-}l) \qquad \text{(Eqn 18)}$$

with $L_s$ being the number of moves in the path from $(i_x', i_y')$ to $(i_x, i_y)$ according to $\varphi_x$ and $\varphi_y$. The incremental distortion $\zeta$ is evaluated only along the paths defined by the various constraints, thus the minimization process can be effectively solved within the constraints. However, the heuristic nature of dissimilarity can also be advantageously included in the method; for example, in this invention a frame is cut into multiple segments to distinguish between confusable letter utterances, such as "a" and "f'. It is understood that many different constraints and combinations of constraints are within the scope of the present invention. In the utterances of different letters, for instance, the time-alignment for the most accurate comparison is not a well-defined linguistic concept so intuitive constraints are utilized in the present invention.

The preferred embodiment of the present invention, due to its small form factor, allows simple integration into existing operating systems (for example, Microsoft Windows CE® for PDAs and ARM7TDMI for cell phones) of consumer electronic devices, thereby obviating extensive redesign and reprogramming. An embodiment of the present invention's speech recognition programs also may be loaded into the flash memory of a device such as a mobile phone or PDA, thus allowing easy, quick, and inexpensive integration of the present invention into existing electronic devices, thereby making redesign or reprogramming of the DSP of the host device unnecessary. Further, the speech recognition programs may be loaded into the memory by the end-user through a data port coupled to the flash memory. This can be achieved also through a download from the Internet. Thus the present invention can be easily installed in mobile devices for communication with the Internet through the Internet itself.

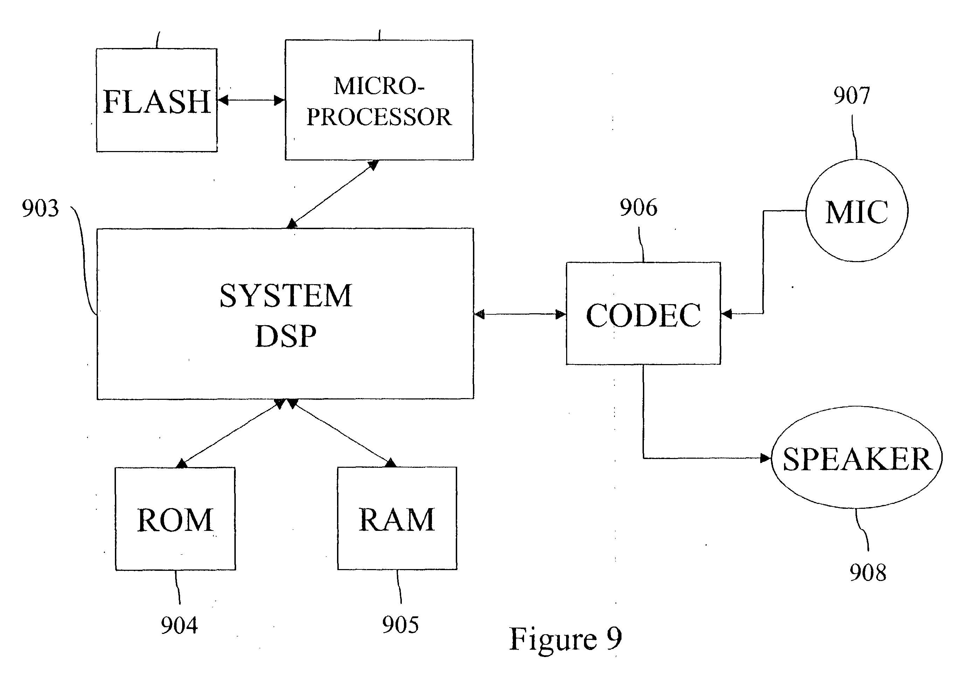

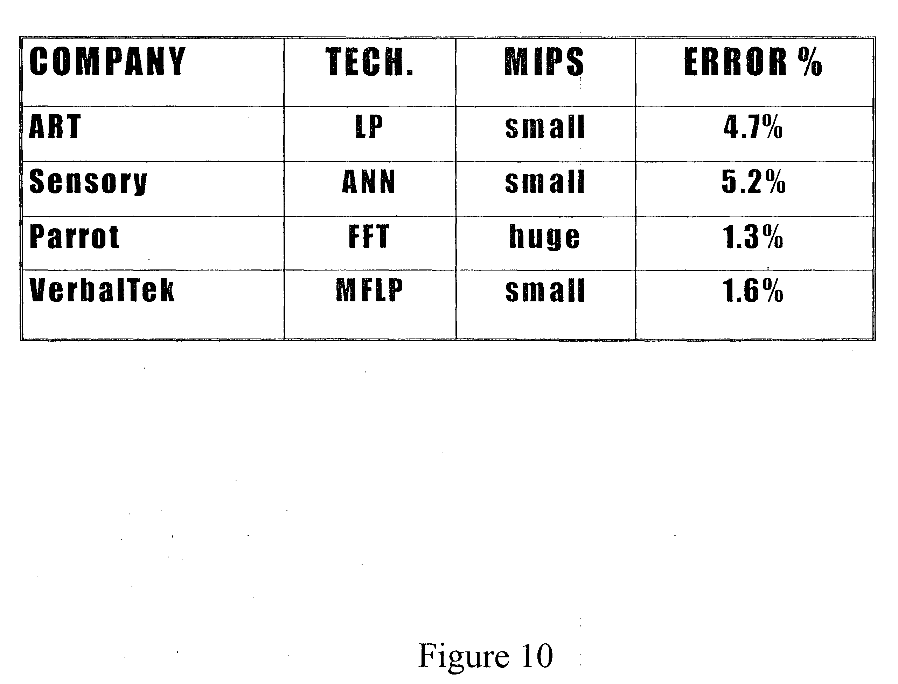

Figure 9 illustrates the system architecture of a cellular phone with an embodiment of the present invention embedded therein. Flash memory 901 is coupled to microprocessor 902 which in turn is coupled to DSP processor 903, which in conjunction with flash memory 901 and microprocessor 902, performs the speech recognition described above. Read-Only-Memory (ROM) device 904 and Random Access Memory (RAM) device 905 service DSP processor 903 by providing memory storage and access for pronunciation database 104 and vocabulary database 203. Speech input through microphone 907 is coded by coder/decoder (CODEC) 906. After speech recognition by DSP processor 903, the speech signal is decoded by CODEC 906 and transmitted to speaker 908 for audio confirmation (in one embodiment of the present invention). Alternatively, speaker 908 can be a visual display. As an example of one embodiment of the application protocol interface (API) of the present invention, the specifications, utilizing ARM77TDMI as base, are: Memory usage requires a code size of 10 KB, scratch pad size of 4KB, and the storage (per template) is 0.5 KB; computational requirements are speech feature extraction of 1.9 MIPS and speech recognition per template of 0.5 MIPS. Speech recognition error performance results and the computional power estimates of one embodiment of the present invention (VerbalTek™) are shown in Figure 10 where comparisons are made with speech recognitions systems from the companies ART, Sensory, and Parrot. The present invention achieves error percentage results that are significantly lower that those of products of companies (ART and Sensory) which require only "small" computational power (MIPS) and comparable accuracy to that of Parrot which requires relatively "huge" computational power.

The present invention thus can be advantageously used for WAP voice commands for Internet communication, e-mail messages, and voice access of large numbers of phonebook entries.

Distributed data processing can be described in terms of client-server systems wherein each performs some processing and memory storage with the bulk of processing and storage being done at the server. The present invention is the separation of a language-dependent processor and database at the client end and a language-independent processor and database at the server end of a client-server system for voice information communication. An example is a PDA, mobile phone, or other electronic device as client and an Internet Service Provide (ISP) server as server. Because of decreased computational power requirements, the present invention overcomes the scalability problem of the prior art.

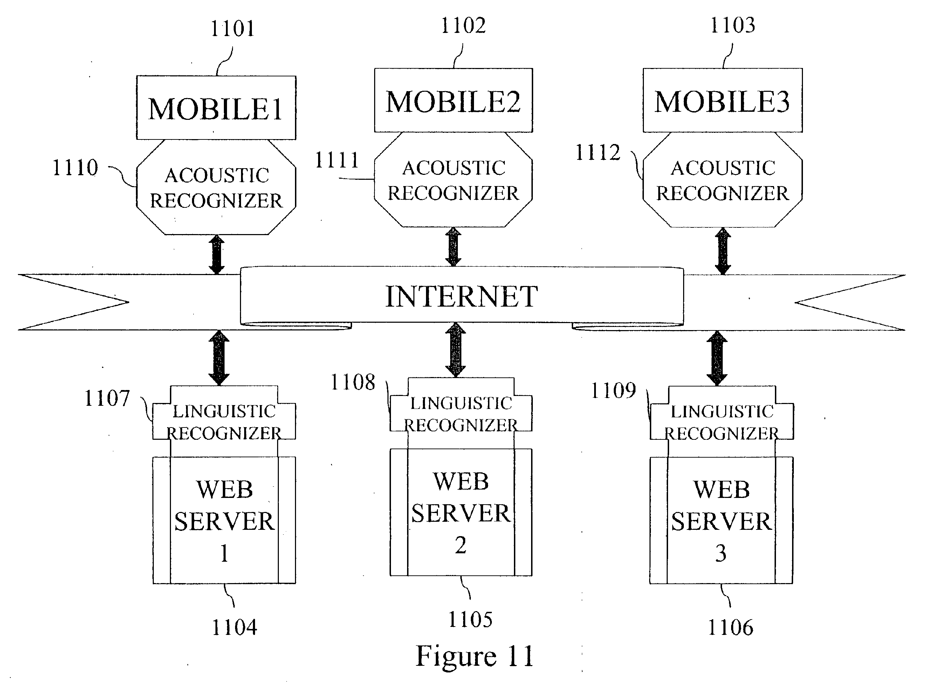

Figure 11 shows the preferred embodiment of the client-based language-dependent speech recognition portion and the server-based language-independent speech recognition portion in the distributed processing scheme according to the present invention. Taken together, the two portions can perform accurate speech recognition for mobile electronic device communication with a server, for example an ISP server. Mobile devices 1101, 1102, 1103, ..., each includes an acoustic recognizer 1110, 1111, 1112, ... respectively, which can be customized to the user's speech patterns and vagaries (for example, by utilizing pronunciation database 103 and utterance comparator 201, as described above) . Servers 1104, 1105, 1106, ..., each include linguistic recognizers 1107, 1108, 1109, ..., respectively, which perform the bulk of the speech recognition (for example, by utilizing vocabulary database 203 and aggregated utterances similarity comparator 202, as described above). Server 1104 can be based at one website and server 1105 can be based at another website, and so on. Because of lowered computational power requirement, one server can serve many clients. The linguistic recognizers 1107, 1108, 1109, ... at each website server 1104, 1105, 1106, ..., can be particularized in their ability to recognize speech according to the nature of the website; for example specialized commercial, technical, medical terminology and the like can be more acccurately recognized by specialized (or more comprehensive pronunciation variations) entries in vocabulary database 203.

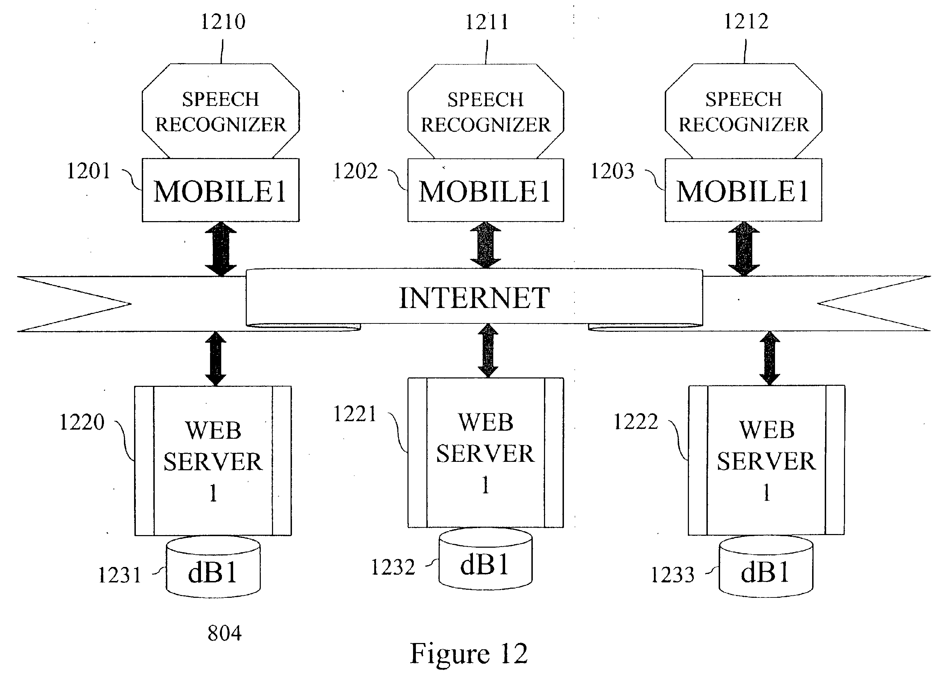

Figure 12 shows another embodiment of the present invention in a mobile electronic devices-to-Internet Service Provider servers system. Mobile devices 1201, 1202, 1203, ..., each include speech recognition systems 1210, 1211, 1212, ..., respectively. Servers 1220, 1221, 1222, ..., include word string databases 1231, 1232, 1233, ..., respectively, which can recognize the word inputs from mobile devices 1201, .... In this embodiment, the bulk of the speech recognition is performed at the mobile device and is a complete system (for example, including pronunciation database 103, utterance comparator 201, and aggregated utterances similarity comparator 202, as described above). In a preferred embodiment of speech recognizers 1201, 1211, 1212, ..., speech is inputted through a microphone that converts the acoustic signal into electronic signals which are parameterized and compared with pronunciation database 103. The best matches based on predetermined criteria (such as cepstral distances) are selected, the selections are aggregated, and then transmitted through the Internet. Web servers 1220, 1221, 1222, ..., receive the transmitted aggregated utterances and compare them with entries in databases 1231, 1232, 1233, .... The best matches are selected utilizing predetermined criteria (such as cepstral distances) and the speech input is thereby recognized. All of the capabilities and features described above in the general speech recognition description above can be incorporated into the distributed speech recognition systems illustrated in Figures 11 and 12, but any speech recognition system and/or method can be advantageously utilized in the present invention.

In operation, a user may use the speaker-independent input default mode whereby a prepackaged character (letter) database for speech recognition is used. To create ("training") personalized database 100, a user records alphabet and numeral sounds by dictating into the system from (for an English example) "a" to "z" and "0" to "9" in a natural voice with a pause of at least 0.2 seconds between individual sounds, thereby generating a "voice string". In one embodiment of the invention, if the letters are run-on, the endpoint detection scheme described above will detect indistinguishable utterances, and the user will be instructed through the display to cease recitation and repeat the dictation from the beginning. The individual letters of the voice string are converted using front-end signal processor 102 which produces a waveform for each letter (such as that shown in Figure 5). The waveforms are then segmented, assigned an address in memory and then stored in memory so that each utterance is mapped into pronunciation database 104 (a process termed "labeling"). Pronunciation database 103 in conjunction with utterance similarity comparator 201 forms, for letters of the English alphabet, the 26 x 26 matrix has columns for the stored waveforms for each letter in pronunciation database 104 and rows for the inputted speech letters for recognition analysis (a sample matrix is appended). Utterance similarity comparator 201 compares the inputted utterance with all the letters in the columns (pronunciation database 103) to find the best match. For example, the inputted word "seat" will be spelled by the user,"s-e-a-t". Because of the vagaries of pronunciation, background noise, and other factors, the letters may be recognized as "x-e-k-d" (each of which letter's pronunciation is similar to the desired letters, and therefore mistakenly "recognized"). In the preferred embodiment of this invention, before the comparison with letters in the database is made, letters with similar pronunciations are grouped together so that the search is more efficient (the search matrix dimensions will be smaller than a 26 x 26 matrix for the English alphabet). For example, the grouping in the preferred embodiment of this invention emphasizes the vowel sounds of the syllables and has been found to significantly reduce the similarity computation, thereby making the grouping ideal for hand-held devices. This grouping assigns "a", "j", and "k" to the same group; "x", "s", and "f" to another group; and "b", "c", "d", "e", and "g" to yet another group. As an illustration of the distortion scoring technique, in the "s-e-a-t" example, the first letter "s" is initially recognized as "x" so there will be a non-zero distortion score assigned based on the cepstral distance (e.g., 2.0); the next letter "e" is correctly recognized, so the score will be 0; the next letter "a" is recognized as "k" which is assigned a score of 1.5; the last letter "t" is recognized as "d" which is assigned a score of 1.0. The total distortion score for the word is 4.5. The distortion scores are then compared in combination with the words in vocabulary database 203. The selected candidate letters, in combination however, are more distinct (and "xekd" does not exist as a word). Word similarity comparator 202 computes a distortion score using the above-described techniques, so that an inputted "xekd" will produce distortion scores with words as follows:

| Input Word | Candidates | Letter Scores | Distortion Score | Similarity % |
|---|---|---|---|---|
| xekd | seat | S1+S2+S3+S4 = S | 1200 | 89% |
| | feat | T1+T2+T3=T4 = T | 2380 | 75% |
| | heat | U1+U2+U3+U4 = U | 4530 | 68% |
| | beat | V1+V2+V3+V4 = V | 8820 | 42% |

Word comparator 202 ranks the distortion scores of each comparison to determine the lowest distortion score, which is the closest match (or greatest similarity) with a word in vocabulary database 203. Display 204 displays the selected word (or individual letter) for confirmation by the user. Any alphanumeric display device, for example a liquid crystal display (LCD), may be advantageously utilized. For uses in mobile phones or PDAs, the combination of letters then constitute the word which then can be matched to the telephone number or other transmission index for transmission.

Although many of the examples in this description are based on the English alphabet, it is understood that they are exemplary only and that the scope of the present invention includes other languages as well, the only restriction being that such language is based on distinguishable sounds. In fact, an embodiment of the present invention provides multiple-language capability since any language's speech recognition can be achieved by the present invention because it is primarily dependent upon the contents of the utterance and vocabulary databases, which can be changed for any language. Similarity comparisons with the spoken sounds and the vocabulary database can be accomplished by the present invention as described above and accuracy can be achieved through the user's dictation of sounds to construct the pronunciation database 104.

In typical use, the present invention allows voice recognition to be achieved in 1-2 seconds, thereby providing a smooth interface with the user. Accuracy in test results has been consistently at the 95% level.

It is particularly noted herein that the present invention is ideal for inputting the monosyllabic character-based letters (or words) of the Chinese language. For example, the words for "mobile phone" are transliterated as a character string "xing-dong-dian-hua". Each word is monosyllabic and has its own meaning (or several meanings), but in aggregate comprise the unique term for "mobile phone". The present invention provides a highly accurate recognition (in part due to heuristic calibration) of individual monosyllabic letters, which when taken in aggregate to form a word, produces even more accurate recognition because of the limited number of sensical choices.

While the above is a full description of the specific embodiments, various modifications, alternative constructions and equivalents may be used. For example, the present invention is suitable for any verbal language that can be separated into utterances; alphabetical languages where the utterances are associated with letters of an alphabet (such as English and Russian) and symbolic languages where the utterances are associated with characters (such as Chinese and Japanese). Further, any speech recognition system or technique can be advantageously utilized. Therefore, the above description and illustrations should not be taken as limiting the scope of the present invention which is defined by the appended claims.

|   | A | B | C | D | E | F | G | H | I | J | K | L | M | N | O | P | Q | R | S | T | U | V | W | X | Y | Z |
|---|---|---|---|---|---|---|---|---|---|---|---|---|---|---|---|---|---|---|---|---|---|---|---|---|---|---|
| A | 0 | 9989 | 13019 | 11428 | 8895 | 18763 | 10215 | 18361 | 22718 | 11748 | 11063 | 22566 | 14527 | 13869 | 21416 | 9262 | 14840 | 31413 | 15891 | 10174 | 15981 | 11838 | 21111 | 21554 | 23550 | 10946 |
| B | 9989 | 0 | 13270 | 10153 | 9511 | 19871 | 13736 | 20123 | 22667 | 12427 | 12853 | 19767 | 15357 | 16200 | 12735 | 11409 | 17000 | 30505 | 17877 | 11777 | 17847 | 10399 | 15808 | 21580 | 19871 | 12366 |
| C | 13019 | 13270 | 0 | 11493 | 11457 | 19226 | 12552 | 20542 | 19746 | 13224 | 11135 | 23983 | 16825 | 16682 | 19142 | 12161 | 14770 | 29723 | 18555 | 14042 | 17303 | 12889 | 18044 | 24203 | 21694 | 11076 |
| D | 11428 | 10153 | 11493 | 0 | 8829 | 21324 | 11642 | 21313 | 20117 | 13399 | 14543 | 19112 | 19365 | 15726 | 14710 | 9664 | 18588 | 27151 | 21854 | 11635 | 17984 | 10422 | 14252 | 26220 | 18799 | 11315 |
| E | 8895 | 9511 | 11457 | 8829 | 0 | 23568 | 9754 | 20318 | 24268 | 12386 | 14020 | 23575 | 13377 | 16143 | 16439 | 8265 | 15256 | 31619 | 21381 | 10184 | 14469 | 8516 | 20017 | 24954 | 23971 | 11226 |
| F | 18763 | 19871 | 19226 | 21324 | 23568 | 0 | 25484 | 12970 | 21261 | 22721 | 19561 | 20825 | 19579 | 15912 | 25723 | 23465 | 19766 | 31292 | 12087 | 25699 | 22991 | 24199 | 21989 | 16128 | 23880 | 17611 |
| G | 10215 | 13736 | 12552 | 11642 | 9754 | 25484 | 0 | 24801 | 18656 | 13910 | 14100 | 26390 | 16608 | 19166 | 25544 | 8752 | 15675 | 37461 | 22516 | 9018 | 16138 | 12067 | 22944 | 27523 | 26494 | 12649 |
| H | 18361 | 20123 | 20542 | 21313 | 20318 | 12970 | 24801 | 0 | 24867 | 20710 | 19066 | 19689 | 17917 | 15001 | 25511 | 22475 | 19999 | 31218 | 10797 | 23588 | 21866 | 22115 | 24336 | 13595 | 29392 | 17914 |
| I | 22718 | 22667 | 19746 | 20117 | 24268 | 21261 | 18656 | 24867 | 0 | 17390 | 15172 | 25467 | 25582 | 21704 | 28957 | 19985 | 23783 | 29084 | 24449 | 20934 | 28013 | 23964 | 18305 | 26803 | 19595 | 20793 |
| J | 11748 | 12427 | 13224 | 13399 | 12386 | 22721 | 13910 | 20710 | 17390 | 0 | 9626 | 22844 | 17265 | 14187 | 20881 | 12661 | 14695 | 32611 | 19808 | 12372 | 16157 | 11841 | 16402 | 22515 | 19253 | 11149 |
| K | 11063 | 12853 | 11135 | 14543 | 14020 | 19561 | 14100 | 19066 | 15172 | 9626 | 0 | 21758 | 16619 | 15087 | 24899 | 12425 | 13564 | 34418 | 16324 | 12821 | 17299 | 14482 | 18262 | 19533 | 20054 | 11495 |
| L | 22566 | 19767 | 23983 | 19112 | 23575 | 20825 | 26390 | 19689 | 25467 | 22844 | 21758 | | | | | | | | | | | | | | | |

```
      0   20440  17995  13336  25424  16380  15023  20272  26809  18035  23339
  18788  20851  19688  21650

M 14527  15357  16825  19365  13377  19579  16608  17917  25582  17265  16619
  20440    0    16412  24146  13546  12979  26197  18657  16758  14215  18774
  21361  18225  27283  16111

N 13869  16200  16682  15726  16143  15912  19166  15001  21704  14187  15087
  17995  16412    0    16728  17571  16651  25749  16594  18009  18347  12027
  14177  20119  20366  12620        .

O 21416  12735  19142  14710  16439  25723  25544  25511  28957  20881  24899
  13336  24146  16728    0    24224  18970  19667  28264  27208  16733  16700
  17824  26457  21226  18996

P  9262  11409  12161   9664   8265  23465   8752  22475  19985  12661  12425
  25424  13546  17571  24224    0    14472  36266  20136   8305  15567  12228
  20179  23436  24095  10794

Q 14840  17000  14770  18588  15256  19766  15675  19999  23783  14695  13564
  16380  12979  16651  18970  14472    0    26415  18795  16154  10805  17236
  20629  22092  22241  14427

R 31413  30505  29723  27151  31619  31292  37461  31218  29084  32611  34418
  15023  26197  25749  19667  36266  26415    0    29073  39499  25294  29226
  18600  27235  19418  29062

S 15891  17877  18555  21854  21381  12087  22516  10797  24449  19808  16324
  20272  18657  16594  28264  20136  18795  29073    0    22252  21506  22831
  23923  13067  27078  18229

T 10174  11777  14042  11635  10184  25699   9018  23588  20934  12372  12821
  26809  16758  18009  27208   8305  16154  39499  22252    0    16518  12176
  21276  24791  25579  11219

U 15981  17847  17303  17984  14469  22991  16138  21866  28013  16157  17299
  18035  14215  18347  16733  15567  10805  25294  21506  16518    0    16370
  22358  22824  24965  15707

V 11838  10399  12889  10422   8516  24199  12067  22115  23964  11841  14482
  23339  18774  12027  16700  12228  17236  29226  22831  12176  16370    0
  17059  26296  20619   9577

W 21111  15808  18044  14252  20017  21989  22944  24336  18305  16402  18262
  18788  21361  14177  17824  20179  20629  18600  23923  21276  22358  17059
    0    25153  18229  15533

X 21554  21580  24203  26220  24954  16128  27523  13595  26803  22515  19533
  20851  18225  20119  26457  23436  22092  27235  13067  24791  22824  26296
  25153    0    29024  22371
```

14

| Y | 23550 | 19871 | 21694 | 18799 | 23971 | 23880 | 26494 | 29392 | 19595 | 19253 | 20054 |
| | 19688 | 27283 | 20366 | 21226 | 24095 | 22241 | 19418 | 27078 | 25579 | 24965 | 20619 |
| | 18229 | 29024 | 0 | 19412 | | | | | | | |
| Z | 10946 | 12366 | 11076 | 11315 | 11226 | 17611 | 12649 | 17914 | 20793 | 11149 | 11495 |
| | 21650 | 16111 | 12620 | 18996 | 10794 | 14427 | 29062 | 18229 | 11219 | 15707 | 9577 |
| | 15533 | 22371 | 19412 | 0 | | | | | | | |

## Claims

1. In a communications network system having a plurality of mobile electronic communication devices mutually communicable with a plurality of dataprocessing devices, an acoustic information recognition system comprising:

an acoustic recognizer electrically disposed on each of the mobile communication devices for recognizing the acoustic information and generating a first set of associated language information; and

a linguistic recognizer electrically disposed on each of the data processing devices for recognizing said first set of associated language information and generating a second set of associated language information.

2. The acoustic information transmission system of claim 1 wherein said acoustic recognizer comprises:

a front-end signal processor for parameterizing the acoustic information;

an utterance pronunciation database storage device for storing a plurality of parametric representations of utterance pronunciations; and

utterance similarity comparator means, coupled to said front-end signal processing means and to said pronunciation database storage means, for comparing the parametric representation of the acoustic information with said plurality of parametric representations of utterance pronunciations, and selecting a first sequence of associations between said parametric representations of the acoustic information and at least one of said plurality of parametric representations of utterance pronunciations responsive to predetermined criteria.

3. The acoustic information transmission system of claim 2 wherein said linguistic recognizer comprises:

a vocabulary database storage device for storing a plurality of parametric representations of word string pronunciations; and

an aggregated utterances similarity comparator, coupled to said acoustic recognizer and to said vocabulary database storage device, for comparing said first sequence of associations with said plurality of parametric representations of aggregated utterance pronunciations stored in said vocabulary database storage device, and selecting a second sequence of associations between said selected parametric representations of the aggregated utterance pronunciations with at least one of said plurality of parametric representations of word string pronunciations responsive to predetermined criteria.

4. A distributed speech information communication system, communicable with the Internet, comprising:

a plurality of mobile electronic communication devices, communicable with the Internet, each including a microphone for converting the acoustic signals into electronic signals;

a plurality of acoustic recognizers, being coupled one-to-one to said microphones, said plurality of acoustic recognizers each having a stored database comprising utterance pronunciations, for converting the electronic signals into utterance information and comparing said utterance information with said utterance pronunciations, selecting at least one of said utterance pronunciations, aggregating said selected utterance pronunciations, and transmitting said selected aggregated utterance pronunciation through the Internet;

a plurality of data processing devices, communicable with the Internet, for receiving said selected aggregated utterance pronunciations through the Internet;

a plurality of linguistic recognizers, being coupled one-to-one to said plurality of data processing devices, said plurality of linguistic recognizers each having a stored database comprising word string pronunciations, for comparing said aggregated utterance pronunciations with said word string pronunciations, and selecting at least one of said word string pronunciations, thereby recognizing the language information.

**5.** In a communications network system having a plurality of mobile electronic communication devices each having disposed therein an utterance pronunciation database, the mobile electronic communication devices being mutually communicable with a plurality of dataprocessing devices each having disposed therein a word string pronunciation database, a method for recognizing acoustic information comprising the steps of:

(a) parameterizing the acoustic information;
(b) comparing the parameterized acoustic information with the utterance pronunciations in the utterance pronunciation database;
(c) selecting at least one of the utterance pronunciations responsive to predetermined critieria;
(d) aggregating the selected at least one of the utterance pronunciations;
(e) comparing the selected at least one of the utterance pronunciations with the word string pronunciations in the word string pronunciation database; and
(f) selecting at least one of the word string pronunciations responsive to predetermined criteria, thereby recognizing the acoustic information.

**6.** The method of claim 5 wherein the acoustic information, the utterance pronunciations, and the word string pronunciations are in the Chinese language.

**7.** The method of claim 5 wherein the acoustic information, the utterance pronunciations, and the word string pronunciations are in the Japanese language.

**8.** The method of claim 5 wherein step (a) comprises utilizing cepstral coefficients to parameterize the acoustic information.

**9.** The method of claim 5 wherein the predetermined criteria of step (c) are calculations of cepstral distances.

**10.** The method of claim 5 wherein the predetermined criteria of step (f) are the calculation of cepstral distances.

**11.** In a communications network system having a plurality of mobile electronic communication devices, the mobile electronic communication devices being mutually communicable with a plurality of dataprocessing devices, a method for recognizing acoustic information comprising the steps of:

(a) parameterizing and storing utterances in each- of the mobile electronic communication device to comprise an utterance pronunciation database;
(b) parameterizing and storing word string pronunciations database in each of the dataprocessing devices to comprise a word string pronunciation database;
(c) parameterizing and storing the acoustic information in at least one of the mobile electronic communication devices;
(d) comparing the parameterized acoustic information with the utterance pronunciations in the utterance pronunciation database in the mobile communication device;
(g) selecting at least one of the utterance pronunciations responsive to predetermined critieria;
(h) aggregating the selected at least one of the utterance pronunciations;
(i) comparing the selected at least one of the utterance pronunciations with the word string pronunciations in the word string pronunciation database in the data processing device; and
(j) selecting at least one of the word string pronunciations responsive to predetermined criteria, thereby recognizing the acoustic information.

**12.** The method of claim 11 wherein the acoustic information, the utterance pronunciations, and the word string pronunciations are in the Chinese language.

**13.** The method of claim 11 wherein the acoustic information, the utterance pronunciations, and the word string pronunciations are in the Japanese language.

**14.** The method of claim 11 wherein steps (a), (b), and (c) parameterization comprises utilizing cepstral coefficients.

**15.** The method of claim 11 wherein the predetermined criteria of steps (g) and (j) are calculations of cepstral

distances.

Figure 1

EP 1 136 983 A1

**103**

PRONUNCIATION DATABASE

**203**

VOCABULARY DATABASE

MIC
**101**

FRONT-END SIGNAL PROCESSOR
**102**

UTTERANCE SIMILARITY COMPARATOR
**201**

AGGREGATED UTTERANCE SIMILARITY COMPARATOR
**202**

DISPLAY
**204**

Figure 2

Figure 3

103 or 203

408

```
                ┌──────────────┐        ┌──────────────┐
                │ PRONUNCIATION│        │   DYNAMIC    │
                │     OR       │        │    TIME      │
                │WORD VOCABULARY│        │   WARPER     │
                │  DATABASE    │        └──────────────┘
                └──────────────┘               │
                        │                       │
                        ▼                       ▼
┌──────────────┐  ┌──────────────┐  ┌──────────────┐  ┌──────────────┐  ┌──────────────┐
│  WAVEFORM    │  │   LETTER     │  │  DISTORTION  │  │   SCORING    │  │  SELECTION   │
│  PARMETRIC   │─▶│  CALIBRATOR  │─▶│  CALCULATOR  │─▶│  CALCULATOR  │─▶│  CALCULATOR  │
│REPRESENTATION│  └──────────────┘  └──────────────┘  └──────────────┘  └──────────────┘
└──────────────┘        │                 │                 │                 │
                       401               402               403               404
```

Figure 4

EP 1 136 983 A1

Figure 5

INITIALIZATION — 601

prev dist [0]
= d ( 0,0 ) — 602

j = 1 — 603

606

j = j + 1

prev dist (j)
= prev dist (j -1)
+ d ( 0,j ) — 604

j < num Y — 605

Y

N

A

Fig.6.

**Fig.7.**

Fig.8.

EP 1 136 983 A1

Figure 9

EP 1 136 983 A1

| COMPANY | TECH. | MIPS | ERROR % |
| --- | --- | --- | --- |
| ART | LP | small | 4.7% |
| Sensory | ANN | small | 5.2% |
| Parrot | FFT | huge | 1.3% |
| VerbalTek | MFLP | small | 1.6% |

Figure 10

1101

MOBILE1

1110 ACOUSTIC RECOGNIZER

1102

MOBILE2

1111 ACOUSTIC RECOGNIZER

1103

MOBILE3

1112 ACOUSTIC RECOGNIZER

INTERNET

1107 LINGUISTIC RECOGNIZER

WEB SERVER 1

1104

1108 LINGUISTIC RECOGNIZER

WEB SERVER 2

1105

1109 LINGUISTIC RECOGNIZER

WEB SERVER 3

1106

Figure 11

Figure 12

## European Patent Office

# EUROPEAN SEARCH REPORT

Application Number

EP 00 30 9800

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 960 399 A (BARCLAY ET AL) 28 September 1999 (1999-09-28)<br><br>* abstract *<br>* column 4, line 1-29 *<br>* column 5, line 2-4 *<br>---- | 1-5, 8-11,14, 15 | G10L15/26 |
| X | WO 95 17746 A (QUALCOMM INC) 29 June 1995 (1995-06-29)<br><br>* abstract; figure 2 *<br>* page 5, line 8-19 *<br>--- | 1-5, 8-11,14, 15 | |
| X | EP 0 671 721 A (CABLE & WIRELESS PLC) 13 September 1995 (1995-09-13)<br>* abstract *<br>* column 2, line 53 - column 3, line 6 *<br>--- | 1-5,11 | |
| A | BORGATTI M ET AL: "A LOW-POWER INTEGRATED CIRCUIT FOR REMOTE SPEECH RECOGNITION" IEEE JOURNAL OF SOLID-STATE CIRCUITS,US,IEEE INC. NEW YORK, vol. 33, no. 7, July 1998 (1998-07), pages 1082-1088, XP000849166 ISSN: 0018-9200<br>* abstract *<br>----- | 1-15 | TECHNICAL FIELDS SEARCHED (Int.Cl.7)<br><br>G10L |

The present search report has been drawn up for all claims

| Place of search | Date of completion of the search | Examiner |
|---|---|---|
| THE HAGUE | 15 February 2001 | Quélavoine, R |

EPO FORM 1503 03.82 (P04C01)

**ANNEX TO THE EUROPEAN SEARCH REPORT
ON EUROPEAN PATENT APPLICATION NO.**

EP 00 30 9800

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2001

| Patent document cited in search report | | | Publication date | Patent family member(s) | | | Publication date |
|---|---|---|---|---|---|---|---|
| US 5960399 | A | | 28-09-1999 | NONE | | | |
| WO 9517746 | A | | 29-06-1995 | AU | 692820 | B | 18-06-1998 |
| | | | | AU | 1375395 | A | 10-07-1995 |
| | | | | BR | 9408413 | A | 05-08-1997 |
| | | | | CA | 2179759 | A | 29-06-1995 |
| | | | | CN | 1138386 | A | 18-12-1996 |
| | | | | EP | 0736211 | A | 09-10-1996 |
| | | | | FI | 962572 | A | 20-08-1996 |
| | | | | JP | 9507105 | T | 15-07-1997 |
| | | | | US | 5956683 | A | 21-09-1999 |
| | | | | ZA | 9408426 | A | 30-06-1995 |
| EP 0671721 | A | | 13-09-1995 | AU | 684872 | B | 08-01-1998 |
| | | | | AU | 1220295 | A | 21-09-1995 |
| | | | | EP | 1031963 | A | 30-08-2000 |
| | | | | EP | 1032189 | A | 30-08-2000 |
| | | | | JP | 8023383 | A | 23-01-1996 |
| | | | | US | 6125284 | A | 26-09-2000 |
| | | | | ZA | 9501388 | A | 20-02-1996 |

EPO FORM P0459

For more details about this annex : see Official Journal of the European Patent Office, No. 12/82